# EUROPEAN PATENT SPECIFICATION

(11) **EP 2 197 281 B1**
(45) Date of publication and mention of the grant of the patent: **31.08.2011**
(21) Application number: 08829587.8
(22) Date of filing: 03.09.2008
(51) Int. Cl.: A01N 53/00, A01P 7/00, A01P 7/02, A01P 7/04

(54) **PESTICIDAL COMPOSITION AND METHOD FOR CONTROLLING PESTS**
PESTIZIDZUSAMMENSETZUNG UND VERFAHREN ZUR SCHÄDLINGSBEKÄMPFUNG
COMPOSITION PESTICIDE ET MÉTHODE DE PROTECTION PHYTOSANITAIRE

(30) Priority: 05.09.2007 JP 2007229981
(43) Date of publication of application: 23.06.2010
(73) Proprietor: Sumitomo Chemical Company, Limited, Tokyo 104-8260 (JP)
(72) Inventor: TANAKA, Yoshito, Toyonaka-shi Osaka 561-0802 (JP)
(74) Representative: Vossius & Partner
(86) International application number: PCT/JP2008/066274
(87) International publication number: WO 2009/031697

(56) References cited:
- EP-A1- 0 823 213
- US-A1- 2003 195 119
- DATABASE WPI Week 200166 Thomson Scientific, London, GB; AN 2001-586144 XP002568698 -& JP 2001 163712 A (DAINIPPON JOCHUGIKU KK) 19 June 2001 (2001-06-19)
- RITCHIE, SCOTT A.; MONTGOMERY, BRIAN L.; WALSH, IAN D.; LONG, SHARRON A.; HART, ALISTAIR J.: "Efficacy of an aerosol surface spray against container-breeding Aedes" JOURNAL OF THE AMERICAN MOSQUITO CONTROL ASSOCIATION, vol. 17, no. 2, June 2001 (2001-06), pages 147-149, XP009129591 ISSN: 8756-971X

## Description

### TECHNICAL FIELD

The present invention relates to a pesticidal composition and a method for controlling pests.

### BACKGROUND ART

[2,5-Dioxo-3-(2-propynyl)-1-imidazolidinyl]methyl 3-(2-methyl-1-propenyl)-2,2-dimethylcyclopropanecarboxylate is known as an active ingredient of insecticidal and acaricidal compositions (for example, JP-B-60-9715).

4-Methoxymethyl-2,3,5,6-tetrafluorobenzyl 3-(2-cyano-1-propenyl)-2,2-dimethylcyclopropanecarboxylate is known as an active ingredient of pesticidal compositions (see, for example, JP-A-2009-2363).

JP-A-2001-163712 relates to an insecticide composition containing, as active components, a specific pyrethroid compound and at least one compound selected from phthalthrin and imiprothrin at a weight ratio of 3:7 to 9:1.

Pesticidal compositions, however, are required to have a larger controlling effect in some cases, depending on their use situation and pests to be controlled by them.

### DISCLOSURE OF THE INVENTION

The present invention is intended to provide a pesticidal composition having an excellent controlling effect on pests.

That is, aspects of the present invention are as follows.

### [Aspect 1]

A pesticidal composition comprising [2,5-dioxo-3-(2-propynyl)-1-imidazolidinyl]methyl 3-(2-methyl-1-propenyl)-2,2-dimethylcyclopropanecarboxylate (hereinafter referred to as the ester compound A) and 4-methoxymethyl-2,3,5,6-tetrafluorobenzyl 3-(2-cyano-1-propenyl)-2,2-dimethylcyclopropanecarboxylate (hereinafter referred to as the ester compound B) as active ingredients.

### [Aspect 2]

The composition according to aspect 1, wherein the ratio between the ester compound A and ester compound B contained is 50: 1 to 1: 50 by weight.

### [Aspect 3]

A method for controlling pests comprising applying an effective amount of a pesticidal composition comprising the ester compound A and the ester compound B as active ingredients to the pests or a locus where the pests inhabit.

### [Aspect 4]

The method according to aspect 3, wherein the ratio between the ester compound A and ester compound B contained in the pesticidal composition is 50: 1 to 1: 50 by weight.

The pesticidal composition of the present invention has an excellent controlling effect on pests.

### MODE FOR CARRYING OUT THE INVENTION

The pesticidal composition of the present invention is characterized by containing the ester compound A and the ester compound B.

The ester compound A is a compound represented by the following formula: 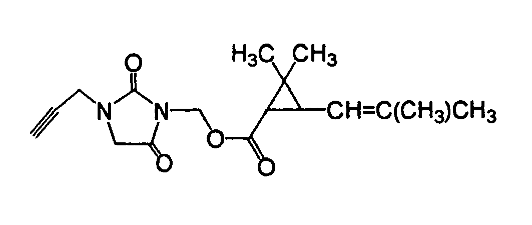 and a mixture of 1R-cis isomer and 1R-trans isomer of the ester compound A is generally known as imiprothrin. The ester compound A can be produced, for example, by the process described in JP-B-60-9715 or JP-A-63-238066. The ester compound B can be produced by the process described in JP-A-2004-2363.

Each of the ester compound A and the ester compound B has isomers relative to the two asymmetric carbon atoms on the cyclopropane ring, and in some cases has isomers due to the carbon-carbon double bond. In the present invention, a compound containing such active isomers in any ratio may be used as the ester compound A or the ester compound B.

The pests against which the pesticidal composition of the present invention is effective include, for example, harmful anthropods such as harmful insects and harmful acarina. Specific examples thereof are as follows:
Lepidoptera: Pyralidae such as Chilo suppressalis, Cnaphalocrosis medinalis and Plodia interpunctella; Noctuidae such as Spodoptera litura, Pseudaletia separata, and Mamestra brassicae; Pieridae such as Pieris rapae crucivora; Tortricidae such as Adoxophyes spp.; Carposinidae; Lyonetiidae; Lymantriidae; Antographa; Agrotis spp. such as Agrotis segetum and Agrotis ipsilon; Helicoverpa spp.; Heliothis spp.; Plutella xylostella; Parnara guttata; Tinea pellionella; Tineola bisselliella, etc.

Diptera: Culex spp. such as Culex pipiens pallens and Culex tritaeniorhynchus; Aedes spp. such as Aedes aegypti and Aedes albopictus; Anopheles spp. such as Anopheles sinensis; Chironomidae; Muscidae such as Musca domestica, Muscina stabulans and Fannia canicularis; Calliphoridae; Sarcophagidae; Anthomyiidae such as Delia platura and Delia antiqua; Tephritidae; Agromyzidae; Drosophilidae; Psychodidae; Phoridae; Simuliidae; Tabanidae; Stomoxyidae; Ceratopogonidae, etc.

Blattaria: Blattella germanica, Periplaneta fuliginosa, Periplaneta americana, Periplaneta brunnea, Blatta orientalis, etc.

Hymenoptera: Formicidae, Vespidae, Bethylidae, Tenthredinidae such as Athalia rosae ruficornis, etc.

Siphonaptera: Ctenocephalides canis, Ctenocephalides felis, Pulex irritants, etc.

Anoplura: Pediculus humanus, Pthirus pubis, Pediculus humanus capitis, Pediculus humanus corporis, etc.

Isoptera: Reticulitermes speratus, Coptotermes formosanus, etc.

Hemiptera: Delphacidae such as Laodelphax striatellus, Nilaparvata lugens and Sogatella furcifera; Deltocephalidae such as Nephotettix cincticeps and Nephotettix virescens; Aphididae; Pentatomidae; Aleyrodidae; Coccoidae; Cimicidae such as Cinex lectularius; Tingidae; Psyllidae, etc.

Coleoptera: Attagenus unicolor; Anthrenus verbasci; corn rootworms such as Diabrotica virgifera and Diabrotica undecimpunctaca howardi; Scarabaeidae such as Anomala cuprea and Anomala rufocuprea; Curculionidae such as Sitophilus zeamais, Lissorhoptrus oryzophilus, Anthonomus grandis grandis and Callosobruchus chinensis; Tenebrionidae such as Tenebrio molitor and Tribolium castaneum; Chrysomelidae such as Oulema oryzae, Phyllotreta striolata and Aulacophora femoralis; Anobiidae; Epilachna spp. such as Henosepilachna vigintioctopunctata; Lyctidae; Bostrychidae; Cerambycidae; Paederus fuscipes; etc.

Thysanoptera: Thrips palmi, Frankliniella occidentalis, Thrips hawaiiensis, etc.

Orthoptera: Gryllotalpidae, Acrididae, etc.

Acarina: Pyroglyphidae such as Dermatophagoides farinae and Dermatophagoides pteronyssinus; Acaridae such as Tyrophagus putrescentiae and Aleuroglyphus ovatus; Glycyphagidae such as Glycyphagus privatus, Glycyphagus domesticus and Glycyphagus destructor; Cheyletidae such as Cheyletus malaccensis and Cheyletus moorei; Tarsonemidae; Chortoglyphidae; Oribatei; Tetranychidae such as Tetranychus urticae, Tetranychus kanzawai, Panonychus citri and Panonychus ulmi; Ixodidae such as Haemaphysalis longicornis; Dermanyssidae such as Ornithonyssus sylvairum and Dermanyssus galinae; etc.

The pesticidal composition of the present invention has an excellent controlling effect particularly on Diptera, Dictyoptera and Hymenoptera.

The weight ratio between the ester compound A and ester compound B contained in the pesticidal composition of the present invention is usually 200 : 1 to 1 :200, preferably 100 : 1 to 1 : 100, more preferably 50 : 1 to 1 : 50.

As the pesticidal composition of the present invention, while a mixture of the ester compound A and the ester compound B may be used as it is, it is applied usually after having been formulated into any of the following formulations. The formulations include, for example, oil formulations, emulsifiable concentrates, wettable powders, flowable concentrates (e.g. aqueous suspension concentrates and aqueous emulsion concentrates), microcapsules, dusts, granules, tablets, aerosols, carbon dioxide formulations, volatile formulations for heating (e.g. insecticidal coils, insecticidal mats for electric heating, and volatile formulations for heating with absorbent wick), Piezo-type insecticidal formulations, heating fumigants (e.g. self-burning-type fumigants, chemical-reaction-type fumigants, and porous ceramic plate fumigants), non-heating volatile formulations (e.g. resin volatile formulations, paper volatile formulations, nonwoven fabric volatile formulations, braided textile volatile formulations, and sublimable tablets), smoking formulations (e.g. foggings), direct contact formulations (e.g. sheet-like contact formulations, tape-like contact formulations and net-like contact formulations), ULV formulations, and poisonous baits.

As a method for the formulation, the following methods can be exemplified.
(1) A method in which the ester compound A and the ester compound B are mixed with a solid carrier, liquid carrier, gaseous carrier, bait or the like, and if necessary, a surfactant and/or other auxiliaries for formulation are added thereto, followed by processing.
(2) A method in which a base material containing no active ingredient is impregnated with the ester compound A and the ester compound B.
(3) A method in which the ester compound A, the ester compound B and a base material are mixed and then molded or shaped.

Such a formulation contains the ester compound A and the ester compound B in a total amount of usually 0.001 to 98% by weight, while the total amount is dependent on the type of the formulation.

The solid carrier used for formulation includes, for example, fine powders and granules of clays (e.g. kaolin clay, diatomaceous earth, bentonite, fubasami clay and acid clay), synthetic hydrated silicon dioxide, talcs, ceramics, other inorganic minerals (e.g. sericite, quartz, sulfur, activated carbon, calcium carbonate and hydrated silica) and chemical fertilizers (e.g. ammonium sulfate, ammonium phosphate, ammonium nitrate, ammonium chloride and urea); and felt, fiber, cloth, knitted goods, sheets, paper, yarn, foams, porous materials and multifilaments of one or more of the following materials: substances which are solid at ordinary temperatures (e.g. 2,4,6-triisopropyl-1,3,5-trioxane, naphthalene, p-dichlorobenzene, camphor and adamantane), wool, silk, cotton, flax, pulp, synthetic resins (e.g. polyethylene resins such as low-density polyethylenes, linear low-density polyethylenes and high-density polyethylenes; ethylene-vinyl ester copolymers such as ethylene-vinyl acetate copolymers; ethylene-methacrylic ester copolymers such as ethylene-methyl methacrylate copolymers and ethylene-ethyl methacrylate copolymers; ethylene-acrylic ester copolymers such as ethylene-methyl acrylate copolymers and ethylene-ethyl acrylate copolymers; ethylene-vinylcarboxylic acid copolymers such as ethylene-acrylic acid copolymers; ethylene-tetracyclododecene copolymers; polypropylene resins such as propylene homopolymers and propylene-ethylene copolymers; poly-4-methylpentene-1, polybutene-1, polybutadienes and polystyrenes; acrylonitrile-styrene resins; styrene-based elastomers such as acrylonitrile-butadiene-styrene resins, styrene-conjugated diene block copolymers and styrene-conjugated diene block copolymer hydrogenation products; fluororesins; acrylic resins such as poly(methyl methacrylate)s; polyamide resins such as nylon 6 and nylon 66; polyester resins such as poly(ethylene terephthalate)s, poly(ethylene naphthalate)s, poly(butylene terephthalate)s, and poly(cyclohexylenedimethylene terephthalate)s; and porous resins such as polycarbonates, polyacetals, polyacryl sulfones, polyacrylates, hydroxybenzoic acid polyesters, polyether imides, polyester carbonates, polyphenylene ether resins, poly(vinyl chloride)s, poly(vinylidene chloride)s, polyurethanes, expanded polyurethanes, expanded polypropylenes and expanded ethylene), glass, metals, ceramics and the like.

The liquid carrier includes, for example, aromatic or aliphatic hydrocarbons (e.g. xylene, toluene, alkylnaphthalene, phenylxylylethane, kerosene, light oil, hexane and cyclohexane), halogenated hydrocarbons (e.g. chlorobenzene, dichloromethane, dichloroethane and trichloroethane), alcohols (e.g. methanol, ethanol, isopropyl alcohol, butanol, hexanol, benzyl alcohol and ethylene glycol), ethers (e.g. diethyl ether, ethylene glycol dimethyl ether, diethylene glycol monomethyl ether, diethylene glycol monoethyl ether, propylene glycol monomethyl ether, tetrahydrofuran and dioxane), esters (e.g. ethyl acetate and butyl acetate), ketones (e.g. acetone, methyl ethyl ketone, methyl isobutyl ketone and cyclohexanone), nitriles (e.g. acetonitrile and isobutyronitrile), sulfoxides (e.g. dimethyl sulfoxide), acid amides (e.g. N,N-dimethylformamide, N,N-dimethylacetamide and N-methylpyrrolidone), alkylidene carbonates (e.g. propylene carbonate), vegetable oils (e.g. soybean oil and cotton seed oil), vegetable essential oils (e.g. orange oil, hyssop oil and lemon oil), and water.

The gaseous carrier includes, for example, butane gas, CFC gas, liquefied petroleum gas (LPG), dimethyl ether and carbon dioxide.

The surfactant includes, for example, alkyl sulfates, alkylsulfonates, alkylarylsulfonates, alkyl aryl ethers and their polyoxyethylenated products, polyethylene glycol ethers, polyhydric alcohol esters and sugar alcohol derivatives.

The other auxiliaries for formulation include, for example, adhesive agents, dispersants and stabilizers. Specific examples thereof are casein, gelatin, polysaccharides (e.g. starch, gum arabic, cellulose derivatives and alginic acid), lignin derivatives, bentonite, saccharides, synthetic watersoluble polymers [e.g. poly(vinyl alcohol)s, poly(vinylpyrrolidone)s and poly(acrylic acid)s], BHT (2,6-di-tert-butyl-4-methylphenol), BHA (a mixture of 2-tert-butyl-4-methoxyphenol and 3-tert-butyl-4-methoxyphenol), etc.

Base materials for the insecticidal coils include, for example, mixtures of raw plant powders (e.g. wood powder and Pyrethrum marc) and binders (e.g. Tabu powder, starch and gluten).

Base materials for the insecticidal mats for electric heating include, for example, plates of compacted fibrils of cotton linters, and plates of compacted fibrils of a mixture of cotton linters and pulp.

Base materials for the self-burning-type fumigants include, for example, combustible and exothermic agents (e.g. nitrates, nitrites, guanidine salts, potassium chlorate, nitrocellulose, ethylcellulose and wood powder), pyrolysis-promoting agents (e.g. alkali metal salts, alkaline earth metal salts, dichromates and chromates), oxygen-supplying agents (e.g. potassium nitrate), combustion-supporting agents (e.g. melamine and wheat starch), extending agents (e.g. diatomaceous earth) and binders (e.g. synthetic pastes).

Base materials for the chemical-reaction-type fumigants include, for example, exothermic agents (e.g. sulfides, polysulfides and hydrosulfides of alkali metals, and calcium oxide), catalysts (e.g. carbonaceous substances, iron carbide and activated clay), organic foaming agents (e.g. azodicarbonamide, benzenesulfonylhydrazide, dinitropentamethylenetetramine, polystyrenes and polyurethanes) and fillers (e.g. natural fiber pieces and synthetic fiber pieces).

The resin used as a base material for the resin volatile formulations and the like includes, for example, polyethylene resins such as low-density polyethylenes, linear low-density polyethylenes and high-density polyethylenes; ethylene-vinyl ester copolymers such as ethylene-vinyl acetate copolymers; ethylene-methacrylic ester copolymers such as ethylene-methyl methacrylate copolymers and ethylene-ethyl methacrylate copolymers; ethylene-acrylic ester copolymers such as ethylene-methyl acrylate copolymers and ethylene-ethyl acrylate copolymers; ethylene-vinylcarboxylic acid copolymers such as ethylene-acrylic acid copolymers; ethylene-tetracyclododecene copolymers; polypropylene resins such as propylene homopolymers and propylene-ethylene copolymers; poly-4-methylpentene-1, polybutene-1, polybutadienes, polystyrenes and acrylonitrile-styrene resins; styrene-based elastomers such as acrylonitrile-butadienestyrene resins, styrene-conjugated diene copolymers and styrene-conjugated diene block copolymer hydrogenation products; fluororesins; acrylic resins such as poly(methyl methacrylate)s; polyamide resins such as nylon 6 and nylon 66; polyester resins such as poly(ethylene terephthalate)s, poly(ethylene naphthalate)s, poly(butylene phthalate)s, and poly(cyclohexylenedimethylene terephthalate)s; and polycarbonates, polyacetals, polyacryl sulfones, polyacrylates, hydroxybenzoic acid polyesters, polyether imides, polyester carbonates, polyphenylene ether resins, poly(vinyl chloride)s, poly(vinylidene chloride)s and polyurethanes. These base materials may be used singly or as a mixture thereof. If necessary, these base materials may contain plasticizers such as phthalic acid esters (e.g. dimethyl phthalate and dioctyl phthalate), adipic acid esters and stearic acid. The resin volatile formulation can be obtained by kneading the ester compound A and the ester compound B with the above-exemplified base material and then molding or shaping the kneaded product by injection molding, extrusion, pressing or the like. If necessary, the resin formulation obtained can be processed into a plate, film, tape, net, string or the like through steps such as molding or shaping, cutting and the like. Such a resin formulation is processed into, for example, any of collars for animal, ear tags for animal, sheet formulations, attracting strings and horticultural stays.

Base materials for the poisonous bait include, for example, bait components (e.g. cereal flour, vegetable oils, saccharides and crystalline cellulose), antioxidants (e.g. dibutylhydroxytoluene and nordihydroguaiaretic acid), preservatives (e.g. dehydroacetic acid), agents for preventing consumption by children or pets (e.g. red pepper powder) and insect-pest-attracting perfumes (e.g. cheese perfume, onion perfume and peanut oil).

In the method for controlling pests of the present invention, the pests are controlled by applying the pesticidal composition of the present invention to the pests or a locus where the pests inhabit.

Specific examples of method for applying the pesticidal composition of the present invention are the following methods. The application method may be properly chosen depending on the form of the pesticidal composition of the present invention, application site, etc.
(1) A method in which the pesticidal composition of the present invention is applied as it is to the pests or a locus where the pests inhabit.
(2) A method in which the pesticidal composition of the present invention is diluted with a solvent such as water and then applied to the pests or a locus where the pests inhabit.

In this case, the pesticidal composition of the present invention formulated into an emulsifiable concentrate, wettable powder, flowable concentrate, microcapsules or the like is usually diluted so that the total concentration of the ester compound A and the ester compound B may be 0.01 to 1,000 ppm.
(3) A method in which the pesticidal composition of the present invention is heated in a locus where the pests inhabit, to vaporize the active ingredients.

In this case, both the applying dosages and applying concentrations of the ester compound A and the ester compound B can be properly determined depending on the form of the pesticidal composition of the present invention, when, where and how the pesticidal composition is applied, kind of pests, degree of damage, etc.

When the pesticidal composition of the present invention is used for preventing epidemics, its applying dosage is usually 0.0001 to 1,000 mg/m³ in terms of the total amount of the ester compound A and the ester compound B in the case of application in a space, and is usually 0.0001 to 1,000 mg/m² in terms of the total amount of the ester compound A and the ester compound B in the case of application on a plane. The insecticidal coils, insecticidal mats for electric heating and the like are used with vaporizing the active ingredients by heating, depending on the type of such formulations. The resin volatile formulations, paper volatile formulations, nonwoven fabric volatile formulations, braided textile volatile formulations, sublimable tablets and the like can be used, for example, by allowing them to stand in a space where they are applied, or by blowing air against them.

As a space where the pesticidal composition of the present invention is applied for preventing epidemics, there are exemplified closets, wall-cupboards, chests of drawers sideboards, toilets, baths, lumber rooms, living rooms, dining rooms, warehouses and the inside of a car. In addition, the pesticidal composition of the present invention can be used also in outdoor open spaces.

When the pesticidal composition of the present invention is used for controlling ectoparasites on livestock such as cattle, horse, pig, sheep, goat, chicken, etc. and small animals such as dog, cat, rat, mouse, etc., it can be applied to the animals by a method well known in veterinary medicine. Specifically, a method for using the pesticidal composition of the present invention is as follows. For systemic control, the pesticidal composition is administered in the form of, for example, tablets, a mixture with feed, a suppository, or an injection (e.g. an intramuscular, subcutaneous, intravenous or intraperitoneal injection). For non-systemic control, the pesticidal composition is used by a method such as spraying with an oil formulation or an aqueous liquid formulation, pour-on or spot-on treatment with the oil formulation or aqueous liquid formulation, washing of the animal with a shampoo formulation, or attachment of a resin volatile formulation in the form of a collar or an ear tag to the animal. When the pesticidal composition of the present invention is administered to the animal, the total amount of the ester compound A and the ester compound B ranges usually from 0.01 to 1,000 mg per kg of the body weight of the animal.

### EXAMPLES

The present invention is illustrated in further detail with the following formulation examples and test example, which should not be construed as limiting the scope of the invention.

Firstly, formulation of the pesticidal composition of the present invention is exemplified.

In the formulation examples and test example, parts are all by mass unless otherwise specified.

### Formulation Example 1

An emulsifiable concentrate is obtained by dissolving 9 parts of the ester compound A and 0.9 part of the ester compound B in a mixture of 37.5 parts of xylene and 37.5 parts of N,N-dimethylformamide, adding thereto 9.1 parts of polyoxyethylene styryl phenyl ether and 6 parts of calcium dodecylbenzenesulfonate, and thoroughly stirring and mixing the resultant mixture.

### Formulation Example 2

A wettable powder is obtained by thoroughly mixing 20 parts of the ester compound A, 20 parts of the ester compound B and 5 parts of Sorpol 5060 (a registered trade name, Toho Chemical Co., Ltd.), adding thereto 32 parts of Carplex #80 (a registered trade name, Shionogi & Co., Ltd.; fine powder of synthetic hydrated silicon dioxide) and 23 parts of 300-mesh diatomaceous earth, and mixing the resultant mixture in a juice mixer.

### Formulation Example 3

Five (5) parts of fine powder of synthetic hydrated silicon dioxide, 5 parts of sodium dodecylbenzenesulfonate, 30 parts of bentonite and 56.7 parts of clay are added to a mixture of 3 parts of the ester compound A and 0.3 part of the ester compound B, and the resultant mixture is thoroughly stirred and mixed. Thereafter, an appropriate quantity of water is added to the resulting mixture and further stirred. The thus stirred mixture is subjected to particle size regulation with a granulator and then through-flow drying, to obtain granules.

### Formulation Example 4

Five (5) parts of the ester compound A, 0.5 part of the ester compound B, 1 part of fine powder of synthetic hydrated silicon dioxide, 1 part of Driless B (mfd. by Sankyo Co., Ltd.) as flocculant and 7 parts of clay are thoroughly mixed in a mortar and then stirred and mixed in a juice mixer. To the resultant mixture is added 85.5 parts of cut clay, and the resulting mixture is thoroughly stirred and mixed to obtain a dust.

### Formulation Example 5

A formulation is obtained by mixing 10 parts of the ester compound A, 1 part of the ester compound B, 35 parts of white carbon containing 50% of polyoxyethylene alkyl ether sulfate ammonium salt, and 54 parts of water, and finely grinding the resultant mixture by a wet grinding method.

### Formulation Example 6

An oil formulation is obtained by dissolving 0.05 part of the ester compound A and 0.1 part of the ester compound B in 10 parts of dichloromethane and mixing the resulting solution with 89.85 parts of an isoparaffin solvent (Isopar M, a registered trade name, Exxon Mobil Corp.).

### Formulation Example 7

An oil-based aerosol is obtained by placing 0.1 part of the ester compound A, 0.05 part of the ester compound B and 49.85 parts of Neochiozol (Chuokasei Co., Ltd.) in an aerosol can, attaching an aerosol valve to the can, charging 25 parts of dimethyl ether and 25 parts of LPG into the can, shaking the can, and then attaching an actuator to the can.

### Formulation Example 8

A water-based aerosol is obtained by charging a mixture of 0.5 part of the ester compound A, 0.05 part of the ester compound B, 0.01 part of BHT, 5 parts of xylene, 3.44 parts of deodorized kerosene and 1 part of an emulsifier {Atmos 300 (a registered trade name, Atlas Chemical Corp.)} and 50 parts of distilled water into an aerosol container, attaching a valve part to the container, and then compressing 40 parts of a propellant (LPG) into the container under pressure through the valve.

### Formulation Example 9

A substantially columnar carrier with a diameter of 5.5 cm and a height of 0.2 cm is produced by rolling up a piece of paperwork (0.5 cm thick, 69 cm long and 0.2 cm wide) having a honeycomb structure, from one end. An appropriate quantity of a solution of 5 parts of the ester compound A and 0.5 part of the ester compound B in 94.5 parts of acetone is uniformly applied on the above-mentioned carrier and then air-dried to remove the acetone, to obtain a paper volatile formulation.

### Formulation Example 10

Three-dimensional knitting fabric (trade name: Fusion, model number: AKE69440, selling agency: Asahi Kasei Fibers Corp., thickness: 4.3 mm, basis weight: 321 g/m²; made of polyamide) is cut into a substantially circular piece with a diameter of 5 cm. An appropriate quantity of a solution of 5 parts of the ester compound A and 0.5 part of the ester compound B in 94.5 parts of acetone is uniformly applied on the above-mentioned piece of the three-dimensional knitting fabric and then air-dried to remove the acetone, to obtain a braided textile volatile formulation.

### Formulation Example 11

A resin volatile formulation is obtained by melt-kneading 97.8 parts by weight of an ethylene-methyl methacrylate copolymer (methyl methacrylate content:10% by weight, MFR = 2 [g/10 min]), 2 parts of the ester compound A and 0.2 part of the ester compound B at 130°C with a 45-mmΦ same-direction twin-screw extruder, further melt-kneading them at 150°C with a 40-mmΦ extruder, extruding the kneaded product into a sheet through a T-die, and then cooling the sheet with a cooling roll.

### Formulation Example 12

A resin volatile formulation is obtained by melt-kneading 97.8 parts by weight of an ethylene-vinyl acetate copolymer (vinyl acetate content:10% by weight, MFR = 2 [g/10 min]), 2 parts of the ester compound A and 0.2 part of the ester compound B at 130°C with a 45-mmΦ same-direction twin-screw extruder, further melt-kneading them at 150°C with a 40-mmΦ extruder, extruding the kneaded product into a sheet through a T-die, and then cooling the sheet with a cooling roll.

### Formulation Example 13

Five (5) parts of the ester compound A and 0.5 part of the ester compound B are dissolved in 94.5 parts of acetone. An appropriate quantity of the resultant solution is applied on paper (2000 cm²) having a foldable structure and is air-dried to remove the acetone, to obtain a paper volatile formulation.

### Formulation Example 14

Three (3) parts of the ester compound A and 0.3 part of the ester compound B are dissolved in 14.6 parts of acetone to obtain a solution. 0.2 Part of zinc oxide, 1.0 part of pregelatinized starch and 42.8 parts of azodicarbonamide are added to the solution, followed by adding thereto 38.1 parts of water. The resultant mixture is kneaded, shaped into granules with an extruder, and then dried. The granules containing the above-mentioned compounds according to the present invention are accommodated in the upper space in a container divided at the center by an aluminum partition, and 50 g of calcium oxide is accommodated in the lower space in the container. Thus, a fumigant is obtained.

### Formulation Example 15

0.5 Part of zinc oxide, 2 parts of pregelatinized starch and 97.5 parts of azodicarbonamide are mixed and the resultant mixture is kneaded with water. The kneaded product is shaped into granules with an extruder and dried. Two (2) grams of the granules are uniformly impregnated with an acetone solution containing 0.58 g of the ester compound A and 0.058 g of the ester compound B, and then are dried. The granules thus obtained are accommodated in the upper space in a container divided at the center by an aluminum partition, and 50 g of calcium oxide is accommodated in the lower space in the container. Thus, a fumigant is obtained.

### Formulation Example 16

An insecticidal coil is obtained by dissolving 0.5 g of the ester compound A and 0.05 g of the ester compound B in 20 ml of acetone, adding the resultant solution to a mixture of 99.4 g of a carrier for mosquito coil (a mixture of Tabu powder, Pyrethrum marc and wood powder in a weight ratio of 4:3:3) and 0.3 g of a green pigment, uniformly stirring and mixing the resultant mixture, adding thereto 120 ml of water, thoroughly kneading the resulting mixture, and then molding and drying the kneaded mixture.

### Formulation Example 17

An insecticidal mat for electric heating is obtained by uniformly impregnating a base material for electric mat (a plate obtained by coagulating fibrils of a mixture of cotton linter and pulp) having an area of 3.4 cm x 2.1 cm and a thickness of 0.22 cm with a solution obtained by mixing 10 parts of the ester compound A, 1 part of the ester compound B, 39.5 parts of acetyltributyl citrate, 39.5 parts of isononyl adipate, 5 parts of a blue pigment and 5 parts of a flavoring material.

### Formulation Example 18

A part for volatile formulation for heating with absorbent wick is obtained by dissolving 0.1 part of the ester compound A and 0.01 part of the ester compound B in 99.89 parts of deodorized kerosene, placing the resultant solution in a container made of vinyl chloride, and inserting one end of an absorbent wick (obtained by coagulating inorganic powder with a binder and baking the coagulated powder) into the container so that the other end of the wick can be heated with a heater.

### Formulation Example 19

An aerosol is obtained by placing 0.2 part of the ester compound A, 0.02 part of the ester compound B and 49.78 parts of Neochiozol (Chuokasei Co., Ltd.) in an aerosol can, attaching an aerosol valve to the can, charging 25 parts of dimethyl ether and 25 parts of LPG into the can, shaking the can, and then attaching an actuator for whole-jetting type aerosol to the can.

### Formulation Example 20

A formulation for spot-on treatment for controlling ectoparasites on animals is obtained by adding 99.78 parts of diethylene glycol monoethyl ether to a mixture of 0.2 part of the ester compound A and 0.02 part of the ester compound B, and thoroughly stirring and mixing the resultant mixture.

### Formulation Example 21

Sublimable tablets are obtained by uniformly applying 1 mL of a solution consisting of 3 parts of the ester compound A, 0.3 part of the ester compound B and 96.7 parts of acetone on discoid solid substances (diameter: 3 cm, thickness: 3 mm) obtained by molding 4,000 mg of 2,4,6-triisopropyl-1,3,5-trioxane under pressure (4 t/cm²), and then drying the solid substances.

### Formulation Example 22

Sublimable tablets are obtained by molding a homogeneous mixture of 200 mg of the ester compound A, 20 mg of the ester compound B and 4,000 mg of 2,4,6-triisopropyl-1,3,5-trioxane into discs (diameter: 3 cm, thickness: 3 mm) under pressure (4 t/cm²).

### Formulation Example 23

Sublimable tablets are obtained by placing 200 mg of the ester compound A, 20 mg of the ester compound B and 4,000 mg of 2,4,6-triisopropyl-1,3,5-trioxane in a 50-mL screw tube, melting them with heating, and then cooling them to room temperature.

The following test example demonstrates the excellent controlling effect of the pesticidal composition of the present invention on pests.

In the following test example, 4-methoxymethyl-2,3,5,6-tetrafluorobenzyl 1R-trans-3-(2-cyano-1-propenyl(Z))-2,2-dimethylcyclopropanecarboxylate was used as the ester compound B, and [2,5-dioxo-3-(2-propynyl)-1-imidazolidinyl]methyl 1R-cis/trans-3-(2-methyl-1-propenyl)-2,2-dimethylcyclopropanecarboxylate was used as the ester compound A.

### Test Example 1

A 0.00156% oil formulation was prepared by dissolving 0.00156 part of the ester compound B in 10 parts of dichloromethane and mixing the resultant solution with 89.99844 parts of an isoparaffin solvent (Isopar M, a registered trade name, Exxon Mobil Corp.) (this oil formulation is hereinafter referred to as comparative composition (1)). Similarly, another 0.00156% oil formulation was prepared by dissolving 0.00156 part of the ester compound A in 10 parts of dichloromethane and mixing the resultant solution with 89.99844 parts of an isoparaffin solvent (Isopar M, a registered trade name, Exxon Mobil Corp.) (this oil formulation is hereinafter referred to as comparative composition (2)).

In addition, an oil formulation according to the present invention (hereinafter referred to as the present composition (1)) was obtained by mixing equal amounts (5 ml) of a 0.00312% oil formulation of the ester compound B and a 0.0312% oil formulation of the ester compound A which had been prepared in the same manner as above.

Ten German cockroaches (Blattella germanica) (5 males and 5 females) were released in a test container (diameter: 8.75 cm, height: 7.5 cm, bottom: 16-mesh metal gauze) whose inner wall had been coated with butter. The container was placed on the bottom of a test chamber (base area: 46 cm x 46 cm, height 70 cm). With a spray gun, 1.5 ml of the present composition (1) was sprayed (spray pressure: 0.4 kg/cm²) from a height of 60 cm above the top surface of the container. Thirty seconds after the spraying, the container was taken out of the test chamber. After a definite period of time, the knocked-down insects were counted, and the knocking-down rate was calculated (the average in two replications).

The same test as above was carried out except for using each of comparative composition (1) and comparative composition (2) in place of the present composition (1), and the knocking-down rate after a definite period of time was calculated (the average in two replications).

Table 1 shows the results.

**[Table 1]**

| | Ester compound B content (wt%) | Ester compound A content (wt%) | KD rate after 7 min. (%) |
|---|---|---|---|
| Present composition (1) | 0.00156 | 0.00156 | 100 |
| Comparative composition (1) | 0.00156 | - | 45 |
| Comparative composition (2) | - | 0.00156 | 10 |

### INDUSTRIAL APPLICABILITY

The pesticidal composition of the present invention has an excellent controlling effect on pests.

## Claims

1. A pesticidal composition comprising [2,5-dioxo-3-(2-propynyl)-1-imidazolidinyl]methyl 3-(2-methyl-1-propenyl)-2,2-dimethylcyclopropanecarboxylate and 4-methoxymethyl-2,3,5,6-tetrafluorobenzyl 3-(2-cyano-1-propenyl)-2,2-dimethylcyclopropanecarboxylate as active ingredients.

2. The composition according to Claim 1, wherein the ratio between [2,5-dioxo-3-(2-propynyl)-1-imidazolidinyl]methyl 3-(2-methyl-1-propenyl)-2,2-dimethylcyclopropanecarboxylate and 4-methoxymethyl-2,3,5,6-tetrafluorobenzyl 3-(2-cyano-1-propenyl)-2,2-dimethylcyclopropanecarboxylate contained in the composition is 50:1 to 1:50 by weight.

3. A non-therapeutic method for controlling pests comprising applying an effective amount of a pesticidal composition comprising [2,5-dioxo-3-(2-propynyl)-1-imidazolidinyl]methyl 3-(2-methyl-1-propenyl)-2,2-dimethylcyclopropanecarboxylate and 4-methoxymethyl-2,3,5,6-tetrafluorobenzyl 3-(2-cyano-1-propenyl)-2,2-dimethylcyclopropanecarboxylate as active ingredients to the pests or a locus where the pests inhabit.

4. The method according to Claim 3, wherein the ratio between [2,5-dioxo-3-(2-propynyl)-1-imidazolidinyl]methyl 3-(2-methyl-1-propenyl)-2,2-dimethylcyclopropanecarboxylate and 4-methoxymethyl-2,3,5,6-tetrafluorobenzyl 3-(2-cyano-1-propenyl)-2,2-dimethylcyclopropanecarboxylate contained in the pesticidal composition is 50:1 to 1:50 by weight.

## Patentansprüche

1. Eine Pestizidzusammensetzung, umfassend [2,5-Dioxo-3-(2-propynyl)-1-imidazolidinyl]methyl-3-(2-methyl-1-propenyl)-2,2-dimethylcyclopropancarboxylat und 4-Methoxymethyl-2,3,5,6-tetrafluorbenzyl-3-(2-cyano-1-propenyl)-2,2-dimethylcyclopropancarboxylat als Wirkstoffe.

2. Die Zusammensetzung gemäß Anspruch 1, wobei das Verhältnis zwischen [2,5-Dioxo-3-(2-propynyl)-1-imidazolidinyl]methyl-3-(2-methyl-1-propenyl)-2,2-dimethylcyclopropancarboxylat und 4-Methoxymethyl-2,3,5,6-tetrafluorbenzyl-3-(2-cyano-1-propenyl)-2,2-dimethylcyclopropancarboxylat, enthalten in der Zusammensetzung, 50 : 1 bis 1 : 50 Gewichtsanteile beträgt.

3. Ein nicht-therapeutisches Verfahren zur Schädlingsbekämpfung, umfassend die Anwendung einer wirksamen Menge einer Pestizidzusammensetzung, umfassend [2,5-Dioxo-3-(2-propynyl)-1-imidazolidinyl]methyl-3-(2-methyl-1-propenyl)-2,2-dimethylcyclopropancarboxylat und 4-Methoxymethyl-2,3,5,6-tetrafluorbenzyl-3-(2-cyano-1-propenyl)-2,2-dimethylcyclopropancarboxylat als Wirkstoffe, auf die Schädlinge oder auf einen Ort, den Schädlinge bewohnen.

4. Das Verfahren gemäß Anspruch 3, wobei das Verhältnis zwischen [2,5-Dioxo-3-(2-propynyl)-1-imidazolidinyl] methyl-3-(2-methyl-1-propenyl)-2,2-dimethylcyclopropancarboxylat und 4-Methoxymethyl-2,3,5,6-tetrafluorbenzyl-3-(2-cyano-1-propenyl)-2,2-dimethylcyclopropancarboxylat, enthalten in der Pestizidzusammensetzung 50 : 1 bis 1 : 50 Gewichtsanteile beträgt.

## Revendications

1. Composition pesticide comprenant du [2,5-dioxo-3-(2-propynyl)-1-imidazolidinyl] méthyl 3-(2-methyl-1-propenyl)-2,2-diméthylcyclopropanecarboxylate et du 4-méthoxymethyl-2,3,5,6-tétrafluorobenzyl 3-(2-cyano-1-propényl)-2,2-dimethylcyclopropanecarboxylate comme ingrédients actifs.

2. Composition selon la revendication 1, dans laquelle le rapport entre le [2,5-dioxo-3-(2-propynyl)-1-imidazolidinyl] méthyl 3-(2-methyl-1-propenyl)-2,2-diméthylcyclopropanecarboxylate et le 4-méthoxymethyl-2,3,5,6-tétrafluorobenzyl 3-(2-cyano-1-propényl)-2,2-dimethylcyclopropanecarboxylate contenus dans la composition est de 50:1 à 1:50 en poids.

3. Procédé non thérapeutique de lutte contre des organismes nuisibles comprenant l'application d'une quantité efficace d'une composition pesticide comprenant du [2,5-dioxo-3-(2-propynyl)-1-imidazolidinyl] méthyl 3-(2-methyl-1-propenyl)-2,2-diméthylcyclopropanecarboxylate et du 4-méthoxymethyl-2,3,5,6-tétrafluorobenzyl 3-(2-cyano-1-propényl)-2,2-dimethylcyclopropanecarboxylate comme ingrédients actifs aux organismes nuisibles ou à un locus où les organismes nuisibles habitent.

4. Procédé selon la revendication 3, dans lequel le rapport entre le [2,5-dioxo-3-(2-propynyl)-1-imidazolidinyl] méthyl 3-(2-methyl-1-propenyl)-2,2-diméthylcyclopropanecarboxylate et le 4-méthoxymethyl-2,3,5,6-tétrafluorobenzyl 3-(2-cyano-1-propényl)-2,2-dimethylcyclopropanecarboxylate contenus dans la composition pesticide est de 50:1 à 1:50 en poids.
